# EUROPEAN PATENT SPECIFICATION

(11) **EP 2 919 972 B1**
(45) Date of publication and mention of the grant of the patent: **16.05.2018**
(21) Application number: 13802219.9
(22) Date of filing: 11.11.2013
(51) Int. Cl.: B29C 70/54, B29C 65/08, B29C 65/56, B29C 65/82, B29K 105/08, B29K 105/12, B29C 70/48, B29C 65/60, B29C 65/06, B29C 65/00, B29L 31/00, B29B 11/04, B29K 105/00, B29B 11/16, B29K 101/12

(54) **MANUFACTURING PLASTIC COMPOSITE ARTICLES**
HERSTELLUNG VON KUNSTSTOFF-VERBUNDTEILEN
FABRICATION D'ARTICLES COMPOSITES DE PLASTIQUE

(30) Priority: 13.11.2012 US 201261725615 P
(43) Date of publication of application: 23.09.2015
(73) Proprietor: WoodWelding AG, 6362 Stansstad (CH)
(72) Inventor: LEHMANN, Mario, 2353 Les Pommerats (CH); MAYER, Jörg, 5702 Niederlenz (CH)
(74) Representative: Frei Patent Attorneys
(86) International application number: PCT/CH2013/000194
(87) International publication number: WO 2014/075198

(56) References cited:
- EP-A1- 1 614 525
- EP-A1- 2 228 199
- WO-A1-98/42988
- FR-A- 1 136 398
- GB-A- 898 082

## Description

### FIELD OF THE INVENTION

The invention is in the fields of textiles and of of fiber reinforced composite materials. It especially relates to manufacturing a product from two fibrous product parts by connecting them and to fiber preforms for shaping processes of articles of composite materials.

### BACKGROUND OF THE INVENTION

In shaping articles of composite materials with fiber reinforcement, especially of continuous fibers, often preforms (semi-finished fiber products) of the fiber reinforcement are made, and then a polymer matrix impregnating the semi-finished product is added. The semi-finished fiber products may be in the form of fiber fabrics (woven, knitted, braided, stitched), fiber tangles, fiber mats, layers of unidirectionally oriented fibers or other structures of fiber assemblies. For some applications, the semi-finished fiber product may be pre-impregnated while retaining its textile or fibrous character.

For the shaping process, the semi-finished fiber products are, often manually, put in a mold. Then either the mold is closed and then the matrix material is injected (such as in transfer molding, especially resin transfer molding RTM), or the matrix material is added and then the mold is closed (such as in compression molding) or the matrix had been intermingled as matrix fiber with the reinforcement fiber and is subsequently consolidated to a solid material in a molding process.

If larger elements - especially flattish elements with a larger area or more complex shapes with pronounced cuppings and/or especially not decoilable surface geometries - need to be shaped (molded), it is often not possible to provide a single semi-finished fiber product for the entire element but several preforms need to line the mold. In order for them to remain stably in place and for securing a homogeneous mechanical strength of the final article, they are tacked to one another. According to the state of the art, this can be done by stitching (not possible in the mold, difficult for large-area parts), stapling (for example taught in EP 2 228 199 A1; metal staples may be subject to corrosion, may cause internal stress due to material properties different from the composite materials and may distort the orientation of the fibers) or by injecting a resin adhesive by a small needle (may cause local thickenings/knots, has a reduced stability against shear forces).

FR 1 136 398 teaches a method of assembling tissue parts by causing a thermoplastic element to be melted between two heating jaws. Similarly, GB 898 082 teaches connecting tissue parts by thermoplastic elements melted between a press pin that conducts heat or ultrasonic energy and a plate or a further press pin. WO 98/42988 and EP 1 614 525 teach approaches of anchoring in porous material a connecting element that comprises a thermoplastic material by applying ultrasonic vibrations.

It would be advantageous to have an improved method for connecting semi-finished fiber product parts for the purpose of molding processes for fiber reinforced composite materials.

### SUMMARY OF THE INVENTION

Accordingly, it is an object of the present invention to provide approaches that overcome drawbacks of the prior art methods. Especially, it is an object of the present invention to provide a method for connecting semi-finished fiber product parts, for example for the purpose of molding processes for fiber reinforced composite materials or as textile objects. It is a further object of the invention to provide an according molding method.

According to an aspect of the invention, a method of manufacturing an article of a fiber reinforced composite material as defined in the claims is provided.

The material of the product parts is soft and pliable. It is a non-coherent material, i.e. it does not follow classical solid body mechanics - thus single structural elements like threads or fibers can be displaced (local compaction, local removal) with only very limited or even no effect to the adjacent elements.

In embodiments, this non-coherent structure can be bound by pre-polymerized material that obtains its final properties only after the end of the manufacturing process, i.e. only later the connecting element(s) is/are introduced to connect the first and second product parts relative to one another.

The product parts may especially be fiber tangles or structures or regularly arranged fibers, such as textiles. Especially, they may be/comprise structures of fibers that are arranged relative to one another so that there are many points where the fibers cross and so that the fibers are movable relative to one another. Within the fiber structures, there will in many embodiments be empty spaces that can be filled with thermoplastic material. The product parts will in themselves be flexible, for example also at room temperature, i.e. the can be deformed, and the shape adapts to the shape of a surface they are put on. In total, generally a plurality of layers of fibers are present (whether the layers are ordered and identifiable or not), and often the thickness of the product parts will be larger than a diameter of a fiber of the structure of fibers by at least an order of magnitude, often by at least a factor 30.

The product parts may comprise a flattish portion or may be entirely flattish. In the step of arranging, the first and second product parts may for example be arranged to overlap in an overlap region. Then, the step of pressing the connecting element against the product parts may comprise doing so in the overlap region.

Alternatively, the product parts may be arranged next to one another so that their edges abut, and the connecting element may comprise a plurality of portions of which, in the step of pressing, at least one is pressed into one product part and at least an other is pressed into the other product part. The portions are connected by a proximal bridge of a dimensionally stable or deformable material.

The steps of pressing and impinging can be carried out fully simultaneously or partly simultaneously, for example by first pressing and then starting to impinge while pressure is maintained.

The steps of providing a connecting element, of pressing and impinging, and of causing the thermoplastic material to re-solidify may be repeated to introduce a plurality of connecting elements each defining a connecting spot or connecting area of the product.

The connecting element may be shaped to penetrate into the structure of continuous or discontinuous fibers when pressed against it even in absence of impinging energy. Especially, the connecting element may comprise one or more piercing tips.

In this, the connecting element may be pin-shaped or comprise at least one pin-shaped portion. If the parts overlap and the connecting element is inserted in the overlap region, the pin or pin-shaped portion may be chosen to have a length exceeding the thickness of a single one of the parts, the length for example corresponding to at least the combined thicknesses of the two parts. The connecting element may have a distal tip - or a plurality of distal tips - and a proximal incoupling surface for coupling in the energy, for example formed by a head or a flat proximal surface portion.

In an alternative embodiment, the connecting element may comprise a plurality of pin portions connected by a proximal bridge portion. Each pin portion has one or more distal tips.

This alternative embodiment may be especially advantageous for processes in which the product parts lie next to one another. In other words, ,in embodiments with such a bridge portion, the product parts do not necessarily have to overlap. Rather, they can be positioned relative to one another so that their end faces/edges are next to one another, and the connecting element(s) then is/are introduced so that at least one pin portion penetrates one of the product parts and at least an other pin portion penetrates the other product part.

The energy may comprise mechanical energy or radiation energy or heat.

The energy according to an embodiment may be supplied in the form of mechanical vibration, especially ultrasonic vibration. The vibration is coupled into the connecting element from the proximal side (the side facing away from the tip(s) - if any). To this end, the proximal side of the connecting element may comprise an incoupling surface, for example a flat surface. If the connecting element has a head portion, the incoupling surface may be formed by the proximal surface of the head portion. The vibration is coupled into the connecting element from a tool (sonotrode) with a for example correspondingly adapted distal surface.

Mechanical vibration or oscillation suitable for devices and methods according to aspects of the invention has preferably a frequency between 2 and 200 kHz (even more preferably between 10 and 100 kHz, or between 20 and 40 kHz) and a vibration energy of 0.2 to 20 W per square millimeter of active surface. The vibrating element (tool, for example sonotrode) is e.g. designed such that its contact face oscillates predominantly in the direction of the element axis (longitudinal vibration) and with an amplitude of between 1 and 100µm, preferably around 10 to 30 µm. Rotational or radial oscillation is possible also.

For specific embodiments of devices, it is possible also to use, instead of mechanical vibration, a rotational movement for creating the necessary friction heat needed for the liquefaction of the anchoring material. Such rotational movement has preferably a speed in the range of 10'000 to 100'000 rpm. A further way for producing the thermal energy for the desired liquefaction comprises coupling electromagnetic radiation into the connection element and designing it to be capable of absorbing the electromagnetic radiation, wherein such absorption preferably takes place within the material to become flowable or in the immediate vicinity thereof. Preferably electromagnetic radiation in the visible or infrared frequency range is used, wherein the preferred radiation source is a corresponding laser. Electric heating of one of the device parts may also be possible.

In this text the expression "thermoplastic material being capable of being made flowable e.g. by mechanical vibration" or in short "liquefiable thermoplastic material" or "liquefiable material" or "thermoplastic" is used for describing a material comprising at least one thermoplastic component, which material becomes liquid (flowable) when heated, in particular when heated through friction i.e. when arranged at one of a pair of surfaces (contact faces) being in contact with each other and vibrationally or rotationally moved relative to each other, wherein the frequency of the vibration is between 2 kHz and 200 kHz, preferably 20 to 40 kHz and the amplitude between 1 µm and 100 µm, preferably around 10 to 30 µm. Such vibrations are e.g. produced by ultrasonic devices as e.g. known from ultrasonic welding. Often, it is advantageous if the material has an elasticity coefficient of more than 0.5 GPa.

Specific embodiments of materials are: Polyetherketone (PEEK), Polyetherimide, a polyamide, for example Polyamide 12, Polyamide 11, Polyamide 6, or Polyamide 66, Polymethylmethacrylate (PMMA), Polyoxymethylene, or polycarbonateurethane, a polycarbonate or a polyester carbonate, or also an acrylonitrile butadiene styrene (ABS), an Acrylester-Styrol-Acrylnitril (ASA), Styrene-acrylonitrile, polyvinyl chloride, polyethylene, polypropylene, and polystyrene, or copolymers or mixtures of these.

In addition to the thermoplastic polymer, the material of the connecting element may also comprise a suitable filler, for example reinforcing fibers, such as glass and/or carbon fibers. The fibers may be short fibers, long fibers or continuous fibers.

Especially, fiber fillers of the connecting material may be oriented, for example oriented in the z-direction (corresponding to the proximodistal direction of the connecting element; perpendicular to the plane defined by the flat semi-finished product parts). In this, the connecting element not only serves for connecting the parts but also as a reinforcement, especially against shear forces on the final article.

In accordance with a group of embodiments, the connecting element may consist of the thermoplastic material, the pure polymer or with a filler.

In accordance with an other group of embodiments, the connecting element may comprise a core of a material that is not liquefiable by the energy that is sufficient to liquefy the thermoplastic material (and for example especially not at temperatures below 350°C or below 250°C); such a core may for example comprise a thin peg of a metal, ceramics, or a not liquefiable plastic, such as a thermoset plastic. Especially, such a core may be of the material that will in the later step be used for molding the article, i.e. the matrix material, the core being in a hardened state.

In accordance with an even further group of embodiments, the connecting element may comprise a heterogeneous composition of a least two different thermoplastic materials, wherein one of the thermoplastic materials is well above its glass transition temperature at the melting temperature of the other one of the thermoplastic materials (for example, it is above its glass transition temperature by at least 50°C). For example, the melting temperatures of the thermoplastic materials may be similar. A first one of the thermoplastic materials may be solvable by a solvent, for example water. The method may then comprise the additional step of bringing, after the step of causing the material to re-solidify, the heterogeneous composition in contact with the solvent to dissolve the first thermoplastic material. This will result in a less dense and therefore better compressible and potentially more pliable connection. This can be advantageous for applications in textile industry.

The second thermoplastic material may be present in the form of a plurality of essentially parallel filaments, fused by the second thermoplastic material.

A material that may be suited to serve as the first thermoplastic material in this is Polyvinyl alcohol (PVA). A second thermoplastic material in such a composition may be Polyethylene terephthalate (PET). An alternative for a first thermoplastic material are polysaccharides. Both are soluble in solvents typically used in textile industry to remove secondary structures, such as alcohols, THF, Acetone, etc.

In different groups of embodiments, the connecting element may comprise, for example in a surface region, material with reduced strength (reduced elasticity coefficient) and/or a reduced glass transition temperature compared to the thermoplastic material of other regions. For example, such a region of reduced strength may comprise the monomer or oligomer of the composite matrix material that is locally absorbed in the thermoplastic material (e.g. by dipping in the monomer solution prior to the insertion of the connecting element) and that is polymerized during or subsequent to the impinging energy in later infiltration and consolidation process of the composite article, thus forming a polymeric bond to the matrix material.. Example pin materials suitable for this are polyester or acrylate based polymers.

Such a region of reduced strength/reduced glass transition temperature may be subject to enhanced internal friction when vibration energy is coupled into the connecting element, whereby there is additional absorption of energy in these regions so that heating in these regions is, at least initially, enhanced compared to other regions.

The product parts may be semi-finished product parts for shaping (for example molding) processes of articles of composite materials. The semi-finished product parts may especially comprise fiber fabrics, fiber tangles, fiber mats, or layers of unidirectionally oriented fibers. The fiber material may be any material known for fiber reinforcement, especially carbon, glass, Kevlar, ceramic, e.g. mullite, silicon carbide or silicon nitride, high-strength polyethylene (Dyneema), etc..

Alternatively, the product parts may be other textile structures, for example for applications in textile industry, such as textiles for manufacturing clothing or linen, but also for example textile structures for application as functional textiles (shading, communication, shielding; geotextiles) and/or textiles for use in construction and building. Also in this, the product parts may comprise a fabric or a tangle; for example a warp knit, an embroidery, a non-woven fabric, for example a felt. The fibers may be fibers known for clothing and/or as high strength and/or protective fibers.

The shape(s) of the product parts is generally flat with a constant or non-constant thickness and with any outer contour suitably adapted to the purpose of the article to be manufactured. This includes product parts that have the shape of fiber strands, i.e. that are elongate.

The product parts may consist of fibers or they may, in addition to the structure of (continuous) fibers, comprise a provisional fixation - such as a thread of a material different from the fiber material. In addition or as an alternative, in applications as semi-finished products for molding processes, they may be pre-impregnated with the matrix material or an other material without having dimensional stability and while maintaining their textile/fibrous character.

In WO 98/42988 and WO 00/79137 processes of anchoring thermoplastic fasteners in porous material, which processes comprise pressing an anchor comprising thermoplastic material against the porous material while impinging the anchor with vibration energy until the thermoplastic material is liquefied at least in parts, penetrates into pores, and after re-solidification constitutes a sound anchoring.

The present invention, in contrast suggests inserting a connecting element into an incoherent structure of fibers that do not (or not necessarily) tack to each other. The invention has brought forward the surprising insight that despite the lack of coherence of the structure of fibers by the described method steps, the conditions for causing a liquefaction that results in a fastening of the parts to each other are met.

In embodiments, it has turned out to be advantageous if the one or combinations of the following conditions are met for this interpenetration to take place:
- a density of the fiber structure is above a certain value; for example the fiber volume (of the fiber structure) may be of for example at least 20% of the volume that surrounds the fibrous volume; often it is advantageous if the fiber volume is between 30% and 65% of the surrounding/enclosing volume;
- in certain circumstances, for example if a softened surface layer is used and/or if a rivet effect is achieved (see below), the density may be somewhat lower, with a minimum density of for example 10% fibrous volume, especially between 20%-65%.
- In cases of high fiber density, the use of mechanical vibrations (especially ultrasound) in combination with a slowly melting tip/slowly melting tips and/or in combination with a separating pre-penetrating step is especially advantageous. This is due to the fact that by the interpenetration of a vibrating tip, the fibers may be displaced with only minimal changes of the fiber orientation, whereby room for the insertion of the connecting element is created. This is because the fibers are locally mobilized (similarly to powder particles in a bulk powder) by the micro-movements induced by the vibrations and can so displaced locally with minimal friction and be packed more densely very locally - similar to powders that can be fluidised by sound during a pouring process.

Further, depending on the dimension of the connecting element relative to the thickness of the parts, in addition to the interpenetration of the fiber structure by the thermoplastic material, a rivet effect may be achieved by pressing the distal end of the connecting element against the support during the process of making the material flowable. Thereby, a distal broadening or foot portion may be generated, which causes, together with a head portion (which may be advantageous in embodiments where a rivet effect is achieved) and a shaft portion between head and foot portions, the connecting element to act as rivet. This rivet effect may be especially advantageous if the density of the fiber structure is relatively low; for example for fiber volumes of below 20% of the surrounding volume; but optionally also for densities higher than that.

In this embodiment and also in other embodiments a head portion may be premanufactured, so that the initial connecting element has such a head. In addition or as an alternative, a head portion may also be formed after at least partial liquefaction of the proximal end of the connecting element during the pressing and impinging, for example by a sonotrode.

The support may be a non-vibrating support, such as a working table or the like or a part of a mold in which in a later step the article is cast. Alternatively, the support may be a vibrating support. For example, if applicable, the step of impinging and pressing may comprise compressing the overlap region of the parts with partly the introduced connecting element between two sonotrodes. In this - and also in embodiments with non-vibrating support - several connecting elements may be partly inserted prior to the coupling-in of energy so that several connecting elements may be fastened simultaneously.

Especially, for applications that comprise a later molding of an article, it may be advantageous if the shape of the support (especially the non-vibrating support) at least in parts corresponds to the shape of the mold in which in a later step the article is cast. Thereby, the semi-finished product may be manufactured in an adapted manner while the mold is used only during the minimum time required by the casting step. The approach according to embodiments of the invention thereby brings a temporal and spatial de-coupling of the preform manufacturing process and the casting step while maintaining the benefits of preform manufacturing in a manner adapted to the mold.

In contrast to prior art methods that inject a resin or similar by a needle into the region between the parts to be connected, the invention compresses the semi-finished product in the overlap region instead of inflating it. This reduces thickness distortions as well as distortions of the order/direction of the fibers.

Also, according to the method, an arbitrary number of semi-finished product parts can be assembled, both, within the mold or outside of the mold. This may be advantageous in terms of reducing the time during which the mold is required per manufacturing cycle and thus ultimately to reduce the manufacturing cycle time. Also, the process has a potential in terms of process automation.

Especially, the productivity may be improved in that a preform (semi-finished product) is manufactured in a separate mold, can be transported and/or stored, and when needed transferred to the mold in which the molding process takes place.

The method provides a stable connection between the parts even for relatively low amounts of thermoplastic material (i.e., even if relatively small connecting elements are used). Thereby, even if the fibers of the product parts are highly ordered, only few and small local imperfections are introduced by the method.

Even further, in contrast to other method such as injection of an adhesive (that subsequently has to be hardened), the methods described herein may be basically carried out as one-step methods for the operating persons who just have to press the connecting element into the parts, for example by a vibration generating apparatus, whereafter the thermoplastic material re-solidifies relatively quickly by cooling.

In case of dense fiber structures and if mechanical vibrations are used as energy source, the mechanical vibrations may have a double function: in addition to being an energy source for liquefaction, they also gently move the fibers slightly away to clear and make space for the connecting element - in contrast to just pressing a staple into the material, which process may damage fibers and the structure. In an embodiment, therefore, the vibrations set in not later than when a tip/tips of the connecting element start being introduced into the fiber structure. In this, optionally the application of mechanical vibrations may be carried out in two steps, for example with a lower power in a first clearing step than in a second liquefaction step.

A method of molding an article of a fiber reinforced composite material may comprise the steps of providing a mold, of manufacturing a semi-finished product by a method as described hereinbefore and/or hereinafter, of adding a matrix material to the mold while the semi-finished product is placed in the mold, and of hardening the matrix material. Thereafter, the mold (if the mold is not part of the article to be manufactured) can be removed.

The matrix material may be a polymer matrix material. Alternatively, also other matrix materials may be used, for example metallic or of ceramics, using the established matrix infiltration or generation methods for form ceramic matrix composites (CMC), metal matrix composites (MMC) or carbon reinforced carbon composites (CFC).

The step of manufacturing the semi-finished product may be carried out in the mold (for example with the parts placed in one mold half if the mold has two halves) or may be carried out outside of the mold, whereafter the product is transferred to the mold.

The step of adding a (polymeric) matrix material may comprise injecting the matrix material into the closed mold, for example in a transfer molding process, especially a resin transfer molding process. Alternatively to injecting the matrix material, the matrix material may also be poured into the mold half, whereafter the mold is closed (compression molding). Alternatively to a (thermosetting) resin, also a thermoplastic material may be added (injected, poured; if thermoplastic commingled fibers are used, the step of adding is carried out by providing the parts and putting them into the mold), in which case the step of hardening comprises letting the mold cool.

An advantage in this is that, compared to known processes, neither a matrix infiltration method nor consolidation techniques nor a matrix material need necessarily be adapted. Rather, concerning the cast step, well established concepts may be used.

The matrix material may itself also comprise a filler, such as a reinforcement of short fibers or long fibers.

Generally, in applications that comprise molding, the volume of the fiber structures in relation to the article's volume defined by the mold may be such that the article ultimately made by the process comprises a substantial volume of the long or continuous fibers (of the structures of fibers), for example of at least 10%, at least 20%, at least 30% or at least 40% and for example at most 65% or 70%.

In embodiments in which the product parts comprise an overlap region, an additional quality control and/or quality monitoring feature may be introduced. This quality control feature may comprise coupling a signal through the connecting element from the proximal or distal side and detecting it through the respective other side. For example, such a signal may be an optical signal, i.e. electromagnetic radiation may be coupled into the connecting element on one side and detected on the other side. In these embodiments, the transmission capability of the material composition of the connecting element for the signal needs to be different than the corresponding transmission capability of the composite surrounding it. For example, the connecting element in this may be transparent, whereas the product parts (and possibly a matrix material) are not. When for example during use substantial shear forces act on the connection to cause a fracture of the connecting element, then the transmission will alter. Upon detection of such a change, an appropriate warning may be generated. Such applications may be especially useful in industries where failures of a connection are not immediately visible and have the potential of being fatal, such as aviation industry.

### BRIEF DESCRIPTION OF THE DRAWINGS

In the following, ways to carry out the invention and embodiments are described referring to drawings. The drawings are schematic. In the drawings, same reference numerals refer to same or analogous elements. The drawings show:
- Fig. 1 two semi-finished product parts to be connected to a semi-finished product;
- Fig. 2 the overlapping parts with a connecting element and a sonotrode;
- Fig. 3 the connecting element inserted into the overlapping parts;
- Fig. 4 a variant of the set-up of Fig. 3;
- Figs. 5-8 different embodiments of connecting elements;
- Fig. 9 a mold with a semi-finished product;
- Figs. 10 and 11 connecting product parts without an overlapping region;
- Fig. 12 a variant in which the connecting element comprises a heterogeneous composition of two different thermoplastic materials; and
- Fig. 13 an application for connection quality monitoring.

### DESCRIPTION OF THE PREFERRED EMBODIMENTS

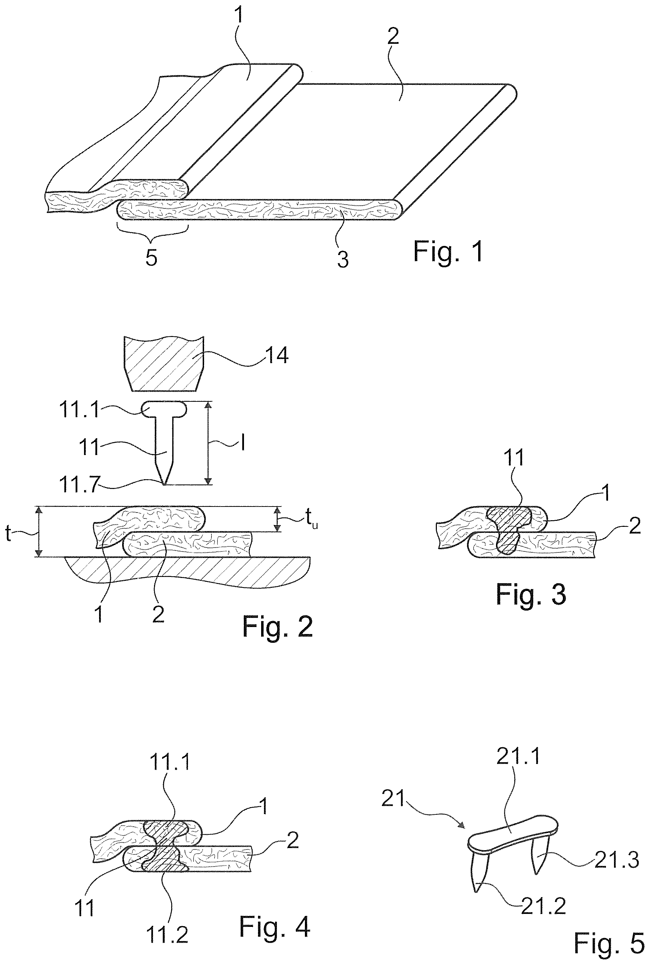

**Figure 1** depicts a first and a second flat product part 1, 2. The product parts in this are assumed to be semi-finished product parts for manufacturing an article in a molding process. However, the teaching of Fig. 1 and the following figures also applies to connecting fibrous product parts for different purposes. The product parts comprise continuous fibers 3 and may be fiber fabrics, especially woven, knitted, braided or stitched or otherwise connected to a textile-like structure, fiber tangles, mats of unidirectionally oriented fibers, for example with different layers of homogeneous orientation within the respective layers, etc. The product parts 1, 2 overlap in an overlap region 5. The product parts 1, 2 may optionally consist of the continuous fibers, or they may comprise additional elements/material.

**Figure 2** shows a connecting element 11 placed in relation to the product parts 1, 2, as well as a sonotrode 14. The connecting element 11 in the depicted embodiment is generally pin-shaped with a head portion 11.1 and a distal tip 11.7. Its length 1 (corresponding to the extension in the z-dimension in the depicted configuration) is larger than the thickness tᵤ of the part 1 that forms the upper part in the overlapping region. It may be of the order of magnitude of the total thickness t of the overlapping parts or even exceed this thickness. In an embodiment, the length of the pin except for the tip - i.e. of the head portion and the shaft portion between head portion and tip -approximately corresponds to the total thickness t.

The connecting element here consists of a thermoplastic material.

The overlapping parts are placed on a non-vibrating support 15.

For connecting the product parts 1, 2 in the overlapping region, the sonotrode 14 is caused to press the connecting element 11 into the product parts 1, 2 while mechanical energy is coupled into the connecting element 11 by the sonotrode 14. This is done until thermoplastic material of the connecting element, under the influence of friction heat generated by the absorption of the mechanical energy, starts melting and is pressed into the fiber structures. The process is for example continued until the connecting element is essentially fully countersunk in the structures, for example being flush with the upper side of the upper part 1.

A possible result is depicted in **Figure 3****.** The material of the connecting element interpenetrates both, the structure of the upper product part 1 and of the lower product part 2 and thereby connects the product parts.

This process is repeated with further connecting elements until enough connection spots are generated to provide the desired mechanical stability.

The support 15 - here being a non-vibrating support - may be constituted by a working table or other suitable surface. It may alternatively also be constituted by a part of a mold that later will serve for molding the article.

**Figure 4** shows a variant of what is shown in Fig. 3. In contrast to the embodiment of Fig. 3, the size of the connecting element and the operating parameters of the sonotrode are chosen so that during the process of pressing and impinging with vibration energy the distal part of the connecting element reaches the support, and portions of the connecting element 11 are liquefied in contact with the support. The result may be a rivet-like enforcement of the connecting effect described above. Here, the connecting element after the process has in addition to a remaining head portion 11.1 also a foot portion 11.2 of liquefied and re-solidified thermoplastic material.

**Figure 5** depicts an other embodiment of a connecting element 21. The connecting element has two pin portions 21.2, 21.3, both with a distal tip, and a proximal bridge portion 21.1 connecting the pin portions. The process of introducing the connecting element into the fiber structures is analogous to the process described for a single pin above.

As a proximal bridge portion, as an alternative to the shown dimensionally stiff bridge portion, also flexible bridge portios, such as textile bridge portions may be used. Especially, the connecting element may for example be a ribbon or foil or slab (constituting the proximal bridge portion) with a plurality of thermoplastic pins.

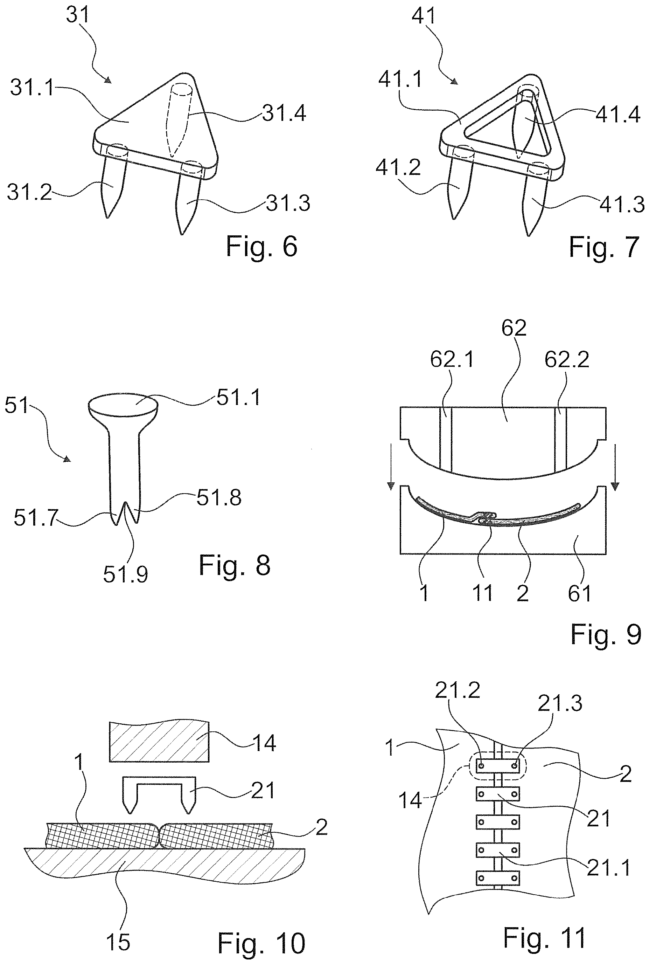

**Figures 6 and 7** yet show variants of connecting elements 31; 41 with three pin portions 31.2, 31.3, 31.4; 41.2, 41.3, 41.4 connected by respective proximal bridge portions 31.1; 41.1. Each pin portion has a distal tip.

The concept of Figures 5-7 may of course also be extended to other numbers of pin portions and arbitrary shapes of bridge portions.

**Figure 8** shows a variant of a connecting element 51 being a single pin (having one shaft) but with multiple tips 51.7, 51.7. During introduction into the fiber structures, fibers may be caught in the indentation 51.9 between the tips 51.7, 51.8, and this may result in a reduced distortion of the fibers from its original state. This may especially be advantageous in case of well-ordered fiber structures such as fiber weavings or layers/bundles of unidirectionally oriented fibers.

For a molding process, the semi-finished product of the product parts 1, 2 and the connecting elements 11 is placed in a mold. **Figure 9** shows the semi-finished product placed in a lower half-mold 61 of a resin transfer molding (RTM) mold. Then, the mold is closed by placing the second half-mold 62 against the first half-mold 61 (of course also more sophisticated molds with more than two mold parts may be used), and a liquid resin is injected through at least one injection channel 62.1, 62.2. The mold may in addition to the injection channel(s) also comprise an exhaust channel for escaping air. After the hardening process, the mold is opened, and the shaped article is removed from the mold.

**Figure 10** shows two product parts 1, 2, for example textiles, placed relative to one another on a support 15, wherein the product parts are adjacent one another with no overlap region. The product parts 1, 2 are connected to one another by means of at least one (preferably a plurality) of connecting elements 21 of a kind that has a plurality of pin portions and a proximal bridge portion. In an example, the edges of the product parts 1, 2 are placed adjacent one another, and a plurality of connecting elements 21 are anchored along the edges so as to seam them. The dotted line shows how a sonotrode 14 can be placed; during the process, the sonotrode is moved from one connecting element 21 to the next. Alternatively, a sonotrode covering a plurality of connecting element simultaneously may be used. Similar considerations apply if an other energy source than mechanical vibration is used.

In applications like the one of Figure 10 and 11 with non-overlapping product parts, it may be advantageous if the fibers of the product parts are bound with respect to movements along the plane of the support. This holds true for example for knits (such as warp knits), embroidery or nonwovens, whereas conventionally weaved textiles may be, depending on the application and horizontal forces expected to act on the connection, less suited.

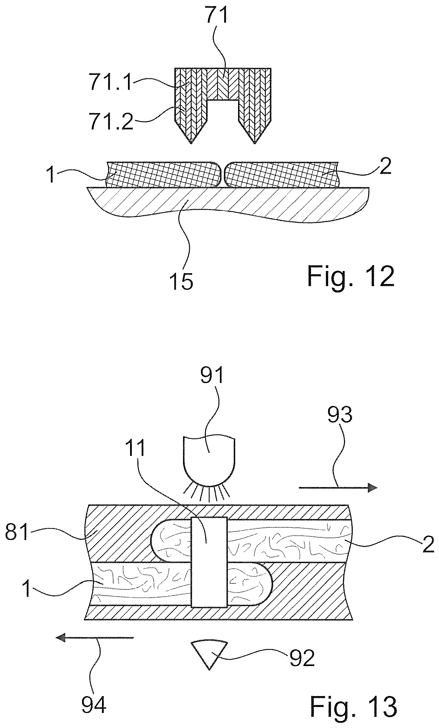

**Figure 12** yet shows, for a configuration similar to the one of Figures 10 and 11, an alternative connecting element 71. The connecting element comprises a plurality of filaments 71.1 of a first thermoplastic material embedded in material 71.2 of a second thermoplastic material. The first thermoplastic material in this may be soluble by a solvent, for example water soluble. Especially, the first thermoplastic material may be PVA, whereas the second thermoplastic material is PET.

Connecting elements of a composition like the one described referring to Figure 12 may optionally be applied also in other configurations than the one shown in Figure 12, for example configurations with an overlap region.

**Figure 13** shows a molded article with product parts 1, 2 being seminfinished product parts embedded in a matrix 81 of a thermoplast. The connecting element 11 is transparent. The combination of a light source 91 (for example an LED; emitting at a wavelength for which the connecting element is transparent) and a sensor 92 serves for quality monitoring. A fracture of the connecting element 11 caused by horizontal forces as illustrated by the arrows 93, 94 will result in a reduced transmission.

In this, in accordance with a first possibility, the matrix material 81 has some transparency for the radiation. The matrix may even be fully transparent for the radiation, if fibrous structure that constitutes the product parts is not (fully) transparent. In accordance with a second possibility in contrast to the shown configuration, the relevant parameters are chosen so that the proximal and distal ends of the connecting element 11 are not covered by any matrix material.

## Claims

1. A method of manufacturing an article of a fiber reinforced composite material, the method comprising the steps of:
- Providing a mold (61, 62);
- Providing a first and a second product part (1, 2), each comprising a structure of fibers;
- Arranging the first and second parts (1, 2) relative to one another and against a support (15, 61);
- Providing a connecting element (11, 21, 31, 41, 51, 71) comprising a thermoplastic material;
- Pressing the connecting element against the product parts to compress the product parts between the connecting element and the support and impinging the connecting element with energy,
thereby causing thermoplastic material of the connecting element to become flowable, and causing the connecting element to be pressed into the product parts; and
- Causing the thermoplastic material to re-solidify, thereby connecting the first and second product parts with each other to yield a semi-finished product;
- Adding a matrix material (81) to the mold while the semi-finished product is placed in the mold; and
- hardening the matrix material while the mold is in a closed state.

2. The method according to claim 1, wherein the steps of pressing and impinging are carried out simultaneously at least to some extent.

3. The method according to any one of the previous claims, wherein the steps of providing a connecting element (11, 21, 31, 41, 51, 71), of pressing and impinging, and of causing the thermoplastic material to re-solidify are repeated to introduce a plurality of connecting elements into the product parts.

4. The method according to any one of the previous claims, wherein the connecting element is pin-shaped with at least one distal tip (11.7), and wherein preferably the connecting element has a proximal head portion (11.1).

5. The method according to any one of the previous claims, wherein the connecting element (11, 21, 31, 41, 51, 71) consists of thermoplastic material or comprises a core of a not thermoplastic material.

6. The method according to any one of the previous claims, wherein the step of impinging comprises coupling mechanical vibration into the connecting element (11, 21, 31, 41, 51, 71).

7. The method according to any one of the previous claims, wherein the structures of fibers of the product parts (1, 2) are fiber fabrics, fiber tangles, fiber mats, or layers of unidirectionally oriented fibers.

8. The method according to any one of the previous claims, wherein as a result of becoming flowable thermoplastic material of the connecting element (11, 21, 31, 41, 51, 71) impregnates portions of the fibers and fills gaps between fibers, thereby connecting fibers.

9. The method according to any one of the previous claims, wherein the step of pressing and impinging is continued until a distal end of the connecting element (11, 21, 31, 41, 51, 71) reaches the support (15, 61) and by being pressed against the support is liquefied and caused to form a distal foot portion, whereby the connecting element also acts as a rivet.

10. The method according to any one of the previous claims, wherein the product parts (1, 2) are flat and in the step of arranging, the first and second product parts are arranged to overlap in an overlap region, and wherein in the step of pressing and impinging the connecting element is pressed against the product parts in the overlap region, wherein preferably a length of the connecting element (11, 21, 31, 41, 51, 71) exceeds a total thickness of the product parts (1, 2) in the overlap region.

11. The method according to any one of claims 1- 9, wherein the product parts (1, 2) are flat, wherein in the step of arranging, the first and second parts are arranged with small sides adjacent to each other, wherein the connecting element comprises at least two pin portions (21.2, 21.3; 31.2, 31.3; 41.2, 41.3, 41.4) connected by a proximal bridge portion (21.1, 31.1, 41.1), and wherein in the step of pressing, at least one of the pin portions is pressed into the first product part and at least an other one of the pin portions is pressed into the second product part.

12. The method according to any one of the previous claims, wherein the matrix material (81) comprises a thermosetting polymer, or wherein the matrix material (81) is a thermoplastic and preferably has a same constituent as the thermoplastic material of the connecting element.

13. The method according to any one of the previous claims, wherein after the step of manufacturing the semi-finished product and prior to the step of adding the polymer matrix material (81), the mold (61, 62) is closed, and wherein the step of adding the polymer matrix material comprises injecting the polymer matrix material into the mold through injection channels (62.1, 62.2), whereby the method is a transfer molding method.

14. The method according to any one of the previous claims, wherein the mold (61, 62) is closed after the step of adding the polymer matrix material (81).

15. The method according to any one of the previous claims, wherein an overall volume of the fibers corresponds to at least 20% of the volume of the article.

## Patentansprüche

1. Verfahren zur Herstellung eines Artikels aus einem faserverstärkten Verbundmaterial, wobei das Verfahren die folgenden Schritte umfasst:
- Bereitstellen einer Gussform (61, 62);
- Bereitstellen eines ersten und eines zweiten Produktteils (1, 2), die jeweils eine Faserstruktur umfassen;
- Anordnen der ersten und zweiten Teile (1, 2) in Bezug aufeinander und gegen eine Stütze (15, 61);
- Bereitstellen eines Verbindungselements (11, 21, 31, 41, 51, 71), das ein thermoplastisches Material umfasst;
- Drücken des Verbindungselements gegen die Produktteile, um die Produktteile zwischen dem Verbindungselement und der Stütze zusammenzudrücken, und Beaufschlagen des Verbindungselements mit Energie, wodurch verursacht wird, dass das thermoplastische Material des Verbindungselements fließfähig wird, und wodurch verursacht wird, dass das Verbindungselement in die Produktteile gedrückt wird; und
- Verursachen, dass sich das thermoplastische Material wieder verfestigt, wodurch die ersten und zweiten Produktteile miteinander verbunden werden, um ein Halbfertigprodukt zu ergeben;
- Hinzufügen eines Matrixmaterials (81) zur Gussform, während das Halbfertigprodukt in der Gussform platziert ist; und
- Härten des Matrixmaterials, während sich die Gussform in einem geschlossenen Zustand befindet.

2. Verfahren nach Anspruch 1, wobei die Schritte des Drückens und Beaufschlagens mindestens bis zu einem gewissen Grad gleichzeitig durchgeführt werden.

3. Verfahren nach einem der vorhergehenden Ansprüche, wobei die Schritte des Bereitstellens eines Verbindungselements (11, 21, 31, 41, 51, 71), des Drückens und Beaufschlagens und des Verursachens, dass sich das thermoplastische Material wieder verfestigt, wiederholt werden, um eine Vielzahl von Verbindungselementen in die Produktteile einzuführen.

4. Verfahren nach einem der vorhergehenden Ansprüche, wobei das Verbindungselement stiftförmig mit mindestens einer distalen Spitze (11.7) ist und wobei das Verbindungselement vorzugsweise einen proximalen Kopfabschnitt (11.1) aufweist.

5. Verfahren nach einem der vorhergehenden Ansprüche, wobei das Verbindungselement (11, 21, 31, 41, 51, 71) aus einem thermoplastischen Material besteht oder einen Kern aus einem nicht thermoplastischen Material umfasst.

6. Verfahren nach einem der vorhergehenden Ansprüche, wobei der Schritt des Beaufschlagens das Einkoppeln von mechanischer Vibration in das Verbindungselement (11, 21, 31, 41, 51, 71) umfasst.

7. Verfahren nach einem der vorhergehenden Ansprüche, wobei die Strukturen der Fasern der Produktteile (1, 2) Fasergewebe, Faserbündel, Fasermatten oder Schichten aus unidirektional orientierten Fasern sind.

8. Verfahren nach einem der vorhergehenden Ansprüche, wobei das thermoplastische Material des Verbindungselements (11, 21, 31, 41, 51, 71), indem es fließfähig wird, Teile der Fasern imprägniert und Lücken zwischen Fasern ausfüllt, wodurch Fasern verbunden werden.

9. Verfahren nach einem der vorhergehenden Ansprüche, wobei der Schritt des Drückens und Beaufschlagens fortgesetzt wird, bis ein distales Ende des Verbindungselements (11, 21, 31, 41, 51, 71) die Stütze (15, 61) erreicht und durch das Drücken gegen die Stütze verflüssigt wird und dazu gebracht wird, einen distalen Fußabschnitt zu bilden, wodurch das Verbindungelement auch als Niete fungiert.

10. Verfahren nach einem der vorhergehenden Ansprüche, wobei die Produktteile (1, 2) flach sind und die ersten und zweiten Produktteile im Anordnungsschritt so angeordnet werden, dass sie sich in einer Überlappungsregion überlappen, und wobei das Verbindungselement im Schritt des Drückens und Beaufschlagens gegen die Produktteile in der Überlappungsregion gedrückt wird, wobei vorzugsweise eine Länge des Verbindungselements (11, 21, 31, 41, 51, 71) eine Gesamtdicke der Produktteile (1, 2) in der Überlappungsregion überschreitet.

11. Verfahren nach einem der Ansprüche 1-9, wobei die Produktteile (1, 2) flach sind, wobei die ersten und zweiten Teile im Anordnungsschritt mit den kurzen Seiten nebeneinander angeordnet werden, wobei das Verbindungselement mindestens zwei Stiftabschnitte (21.2, 21.3; 31.2, 31.3; 41.2, 41.3, 41.4) umfasst, die über einen proximalen Brückenabschnitt (21.1, 31.1, 41.1) miteinander verbunden sind, und wobei mindestens einer der Stiftabschnitte im Schritt des Drückens in den ersten Produktteil gedrückt wird und mindestens ein anderer der Stiftabschnitte in den zweiten Produktteil gedrückt wird.

12. Verfahren nach einem der vorhergehenden Ansprüche, wobei das Matrixmaterial (81) ein wärmehärtbares Polymer umfasst, oder wobei das Matrixmaterial (81) ein thermoplastisches Material ist und vorzugsweise einen gleichen Bestandteil wie das thermoplastische Material des Verbindungselements aufweist.

13. Verfahren nach einem der vorhergehenden Ansprüche, wobei die Gussform (61, 62) nach dem Schritt des Herstellens des Halbfertigprodukts und vor dem Schritt des Hinzufügens des Polymermatrixmaterials (81) geschlossen wird, und wobei der Schritt des Hinzufügens des Polymermatrixmaterials das Einspritzen des Polymermatrixmaterials in die Gussform durch Einspritzkanäle (62.1, 62.2) umfasst, wodurch das Verfahren ein Transfer-Moulding-Verfahren ist.

14. Verfahren nach einem der vorhergehenden Ansprüche, wobei die Gussform (61, 62) nach dem Schritt des Hinzufügens des Polymermatrixmaterials (81) geschlossen wird.

15. Verfahren nach einem der vorhergehenden Ansprüche, wobei ein Gesamtvolumen der Fasern mindestens 20% des Volumens des Artikels entspricht.

## Revendications

1. Procédé de fabrication d'un objet en matériau composite renforcé de fibres, le procédé comportant les étapes qui consistent à :
prévoir un moule (61, 62),
prévoir une première et une deuxième partie (1, 2) de produit, chacune comprenant une structure de fibres,
agencer la première et la deuxième partie (1, 2) l'une par rapport à l'autre et contre un support (15, 61),
prévoir un élément de liaison (11, 21, 31, 41, 51, 71) qui comprend un matériau thermoplastique,
repousser l'élément de liaison contre les parties du produit pour comprimer les parties du produit entre l'élément de liaison et le support et appliquer de l'énergie sur l'élément de liaison pour ainsi amener le matériau thermoplastique de l'élément de liaison à devenir fluide et l'élément de liaison à être repoussé dans les parties du produit et
amener le matériau thermoplastique à se resolidifier pour ainsi relier la première et la deuxième partie de produit l'une à l'autre de manière à obtenir un produit semi-fini,
ajouter un matériau de matrice (81) dans le moule pendant que le produit semi-fini est placé dans le moule et
durcir le matériau de matrice pendant que le moule est fermé.

2. Procédé selon la revendication 1, dans lequel les étapes de compression et d'application d'une énergie sont réalisées simultanément au moins dans une certaine mesure.

3. Procédé selon l'une quelconque des revendications précédentes, dans lequel les étapes qui consistent à prévoir un élément de liaison (11, 21, 31, 41, 51, 71), à repousser et à appliquer de l'énergie ainsi qu'à amener le matériau thermoplastique à se resolidifier sont répétées de manière à introduire plusieurs éléments de liaison dans les parties de produit.

4. Procédé selon l'une quelconque des revendications précédentes, dans lequel l'élément de liaison présente la forme d'un goujon présentant au moins une pointe distale (11.7), l'élément de liaison présentant de préférence une partie proximale (11.1) en forme de tête.

5. Procédé selon l'une quelconque des revendications précédentes, dans lequel élément de liaison (11, 21, 31, 41, 51, 71) est constitué d'un matériau thermoplastique ou comprend une âme en matériau non thermoplastique.

6. Procédé selon l'une quelconque des revendications précédentes, dans lequel l'étape d'application d'énergie comprend l'application de vibrations mécaniques dans l'élément de liaison (11, 21, 31, 41, 51, 71).

7. Procédé selon l'une quelconque des revendications précédentes, dans lequel les structures de fibres des parties de produit (1, 2) sont des tissus de fibres, des fibres emmêlées, des feutres de fibres ou des couches de fibres orientées unidirectionnellement.

8. Procédé selon l'une quelconque des revendications précédentes, dans lequel du fait que le matériau thermoplastique de l'élément de liaison (11, 21, 31, 41, 51, 71) devient fluide, il imprègne des parties des fibres et remplit les interstices présents entre les fibres pour ainsi relier les fibres.

9. Procédé selon l'une quelconque des revendications précédentes, dans lequel l'étape de poussée et d'application d'énergie est poursuivie jusqu'à ce qu'une extrémité distale de l'élément de liaison (11, 21, 31, 41, 51, 71) atteigne le support (15, 61), soit liquéfié par le fait qu'il est repoussé contre le support et soit amené à former une partie distale en pied, l'élément de liaison jouant ainsi le rôle d'un rivet.

10. Procédé selon l'une quelconque des revendications précédentes, dans lequel les parties de produit (1, 2) sont aplaties et dans lequel, au cours de l'étape d'agencement, la première et la deuxième partie de produit sont agencées de manière à se superposer dans une zone de superposition, et dans lequel au cours de l'étape de poussée et d'application d'énergie, l'élément de liaison est repoussé contre les parties de produit dans la zone de superposition, la longueur de l'élément de liaison (11, 21, 31, 41, 51, 71) dépassant de préférence l'épaisseur totale des parties de produit (1, 2) dans la zone de superposition.

11. Procédé selon l'une quelconque des revendications 1 à 9, dans lequel les parties de produit (1, 2) sont aplaties, et dans lequel au cours de l'étape d'agencement, la première et la deuxième partie sont agencées avec leur petit côté en position adjacente l'un à l'autre, l'élément de liaison comprenant au moins deux parties de goujon (21.2, 21.3; 31.2, 31.3; 41.2, 41.3, 41.4) reliées par une partie proximale en pont (21.1, 31.1, 41.1), et dans lequel au cours de l'étape de poussée, au moins l'une des parties en goujon est repoussée contre le premier produit et au moins une autre des parties en goujon est repoussée dans la deuxième partie de produit.

12. Procédé selon l'une quelconque des revendications précédentes, dans lequel le matériau de matrice (81) comprend un polymère thermodurcissable ou dans lequel le matériau de matrice (81) est un thermoplastique et de préférence présente le même constituant que le matériau thermoplastique de l'élément de liaison.

13. Procédé selon l'une quelconque des revendications précédentes, dans lequel après l'étape de fabrication du produit semi-fini et avant l'étape d'addition du matériau polymère de matrice (81), le moule (61, 62) est fermé, et dans lequel l'étape d'addition d'un matériau polymère de matrice comprend l'injection du matériau polymère de matrice dans le moule par des canaux d'injection (62.1, 62.2), de sorte que le procédé est un procédé de moulage par transfert.

14. Procédé selon l'une quelconque des revendications précédentes, dans lequel le moule (61, 62) est fermé après l'étape d'addition du matériau polymère de matrice (81).

15. Procédé selon l'une quelconque des revendications précédentes, dans lequel le volume total des fibres correspond à au moins 20 % du volume de l'objet.
